Europäisches Patentamt

European Patent Office

Office européen des brevets

(11) Publication number: **0 002 296**
**A1**

# EUROPEAN PATENT APPLICATION

(21) Application number: 78200315.6

(22) Date of filing: 24.11.78

(51) Int. Cl.²: **H 02 M 7/10**
**G 03 G 15/044**

(30) Priority: 07.12.77 GB 50953/77

(43) Date of publication of application:
13.06.79 Bulletin 79/12

(84) Designated contracting states:
BE DE FR GB

(71) Applicant: AGFA-GEVAERT Naamloze Vennootschap
Septestraat 27
B-2510 Mortsel(BE)

(72) Inventor: Broekaert, Johan Marie
Heideland 3
B-2510 Mortsel(BE)

(72) Inventor: Willem, Arnold August
Spelonckvaart 60
B-9080 Moerbeke-Waas(BE)

(72) Inventor: De Gueldre, Jean Martha
Meester Richard Goossensstraat 34
B-2520 Edegem(BE)

(54) DC-voltage supply.

(57) Disclosed is an DC-voltage generator of the rectifier/
multiplier type by means of which integers of a basic voltage
(corresponding with that of one stage of the multiplier chain)
can be produced.

Moreover, the circuitry enables a refreshing or regener-
ating technique for compensating the voltage drop along the
chain to be carried out.

The unit can be used as high DC-voltage supply for
simultaneously generating the voltage over the gap and the
voltages for the field correcting electrodes in ionography
imaging chambers.

Fig. 2

- 1 -

## DC - Voltage Supply.

This invention is concerned with DC-voltage suppl'as and more particularly with DC-voltage supplies of the multiplier type by means of which extremely high DC-voltages may be obtained starting from an AC-voltage of low- or mid-range value.

One field of use for the invention is the simultaneous supply of different high DC-potentials along the surfaces of opposed electrodes of an ionographic imaging chamber to create an electrostatic field having an equipotential plane configuration which is not parallel with the surfaces of the opposed electrodes. Examples of ionographic imaging chambers having electrodes with varying surface potential for electrostatic field correction purposes are disclosed, e.g. in United States Patent Specification no. 3,859,529 of Andrew P.Proudian, Teodoro Azzarelli and Murray Samuel Welkowsky issued January 7, 1975.

In order to obtain a plurality of DC-potentials several methods are available.

The most common method consists in rectifying high AC-voltages, applying the rectified AC-voltage to a potentiometer circuit, if necessary after a preliminary filtering by means of high voltage capacitors, and deriving the required voltages from appropriate points in the potentiometer circuit. The potentiometer itself, being resistive in nature, consumes a considerable amount of energy in the form of heat. Moreover, due partly to the necessary break-

GV.925

down characteristics of the insulation of the transformer or of the rectifying device itself, apparatus for producing DC-potentials in that way, are expensive and/or voluminous. The structure of the transformer, especially the insulation of the secondary winding may become less critical when making use of a so-called Greinacher circuit by means of which the rectified DC-voltage may be doubled, but it is still necessary to utilise a potentiometric technique to produce a plurality of high DC-voltages.

Other prior art devices by which a series of high DC-voltages can be generated rely upon a so-called cascade circuit by means of which an AC-voltage of moderate magnitude is rectified and multiplied by means of a number of rectifying units comprising two rows of series-connected capacitors and interconnected diodes. High DC-voltages can be generated by providing a sufficient number of capacitors and diodes. The major advantages of such a circuit are that no special problems arise with respect to the transformer design and that as the capacitors are series-coupled they constitute a kind of static potentiometer which theoretically does not itself consume a part of the rectified power.

However such a cascade rectified/multiplier incorporating a long chain of rectifying units has the disadvantage that an uncontrollable voltage drop occurs along the chain. This is mainly due to the rather high internal resistance of the chain and of its constituent elements.

Another disadvantage of such a cascade rectifier/multiplier is the fact that even and odd multiples of the basic rectified voltage are delivered by different rows of capacitors. One row of capacitors provided by the series-coupled units delivers the even multiples of the basic rectified voltage, whereas the other row delivers the odd multiples thereof. When an arbitrary number of odd and even multiples of the basic voltage is required si-

GV.925

multaneously, one sole cascade rectifier/multiplier chain does not suffice. The present invention provides an AC to DC voltage converter circuit which avoids these disadvantages.

According to the invention, there is provided a DC-voltage supply by means of which an AC-voltage delivered by an AC-source is converted into a DC-voltage, comprising first and second rectifiers each having at least a cathode and an anode, and first and second capacitors each having first and second electrodes, said apparatus being characterised in that the cathode of said first rectifier is connected to the first electrode of said first capacitor and the anode of said first rectifier is connected to the second electrode of said second capacitor, and analogously, the cathode of said second rectifier is connected to the first electrode of said second capacitor and the anode of said second rectifier is connected to the second electrode of said first capacitor, and in that there is a pair of input terminals which are respectively connected to different corresponding electrodes of said first and second rectifiers, and a pair of output terminals which are respectively connected to one and the other of the other corresponding electrodes of such rectifiers.

It will be clear that, depending on the electrode connections of the rectifying elements a DC-voltage of positive or negative polarity will be obtained. When the cathodes are connected to the input terminals, a DC-voltage of negative polarity will be obtained as output, whereas, when the anodes are connected to the input terminals, the DC-voltage obtained as output will have a positive polarity.

Preferably the time constant of the rectifying apparatus is such that a substantially continuous DC-voltage is obtained as output. Most preferably, therefor, the AC-input voltage will have a frequency, the period of which is

GV.925

small when compared with the time constant.

In carrying out the invention, use can be made of vacuum tube rectifiers or solid state rectifiers. In certain embodiments solid state rectifiers with very short switching times are used. Such rectifiers are particularly preferred when a relatively high frequency AC power source is to be employed. The rectifiers used may be uncontrolled rectifiers, such as diodes, or they may have supplementary control electrodes as is the case for thyristors, etc.

Any number of units, each comprising rectifying apparatus according to the invention, can be connected in series to obtain a required DC-voltage output which is a multiple of the DC-output of one of the units. The coupling is effected by connecting the output terminals of one unit with the input terminals of the following unit. By series coupling a sufficient number of the units very high DC-voltages can be derived such as may be required for operating an ionographic imaging chamber as hereinbefore referred to. High DC-voltage outputs of positive and negative polarities can be obtained.

The invention includes a voltage-multiplier rectifier comprising a plurality of series-connected rectifying apparatus according to the invention as hereinbefore defined.

Preferably individual rectifying apparatus according to the invention are manufactured as unitary components having facility for easy coupling of any number of such components in series to form a voltage-multiplier rectifier and having terminals via which a DC voltage can be tapped from a said multiplier.

The DC-voltage generated by a rectifying apparatus according to the invention will have the form of a half wave which has undergone a smoothening effect, depending on the rating of the capacitors.

In preferred embodiments a voltage-multiplier rectifier

GV.925

according to the invention is connected to a source of relatively high frequency alternating current (having e.g. a frequency of 10-50 kc/s) of square wave form. In such cases the individual rectifying apparatus preferably incorporate solid state rectifiers with very short switching times as previously referred to. The AC-source preferably comprises a power oscillator whose output power and frequency can be easily controlled. In that way the multiplier can be made very flexible. It has been found that especially when using a very long chain series of basic rectifying units according to the invention, the voltage drop which inevitably occurs along the chain may be compensated by means of separate windings on the transformer coil forming part of the oscillator, which may be connected to any desired points of the chain. In this way a kind of boosting or regeneration of the DC voltage may be realised.

Thus, the invention also includes : a generator for generating a high DC-voltage which generator comprises a source of AC-voltage, a transformer having a primary winding connected to said AC-voltage source and having a number of secondary windings, and a voltage-multiplier rectifier comprising a plurality of series-connected rectifying apparatus according to the invention as hereinbefore defined, and wherein one of said secondary transformer windings is connected to the input terminals of the first of said series of rectifying apparatus and the one each other of said secondary windings is connected to the input terminals of another of the rectifying apparatus in said series.

Certain embodiments of the invention will now be described, by way of example, with reference to the accompanying diagrammatic drawings, in which :

Fig. 1 illustrates in a diagrammatic way an ionography chamber and the voltages at which it is operated,

GV.925

BAD ORIGINAL

Fig. 2 is the electronic scheme of a rectifier unit according to the invention and

Fig. 3 is a block diagram of a high DC-voltage supply. in which a plurality of rectifying units of fig. 2 are used.

Fig. 4 illustrates the effect of regenerating the AC-voltage along a chain of rectifying elements of Fig.3.

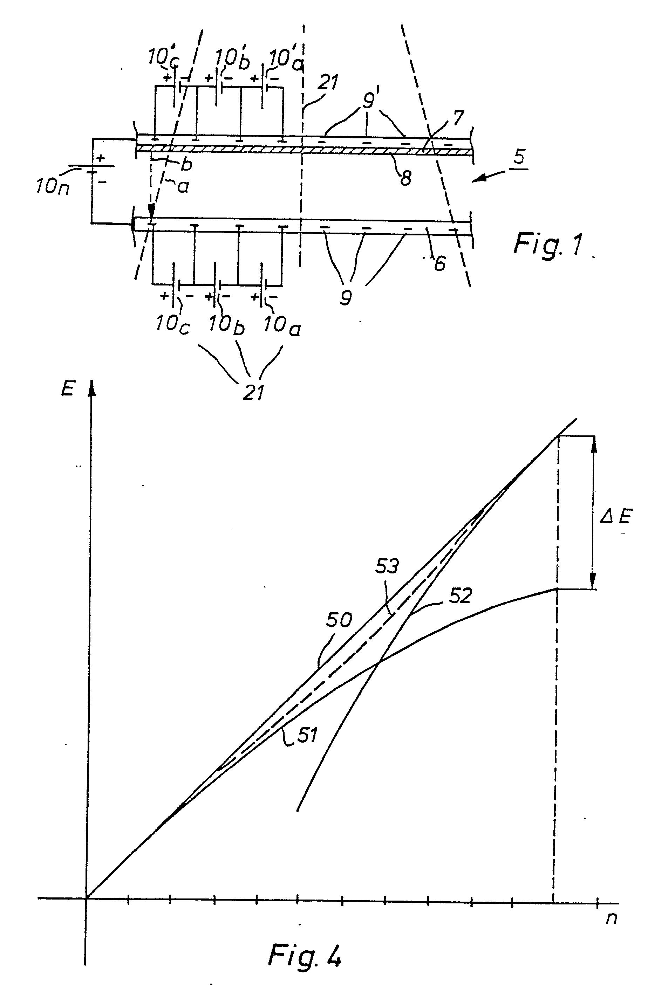

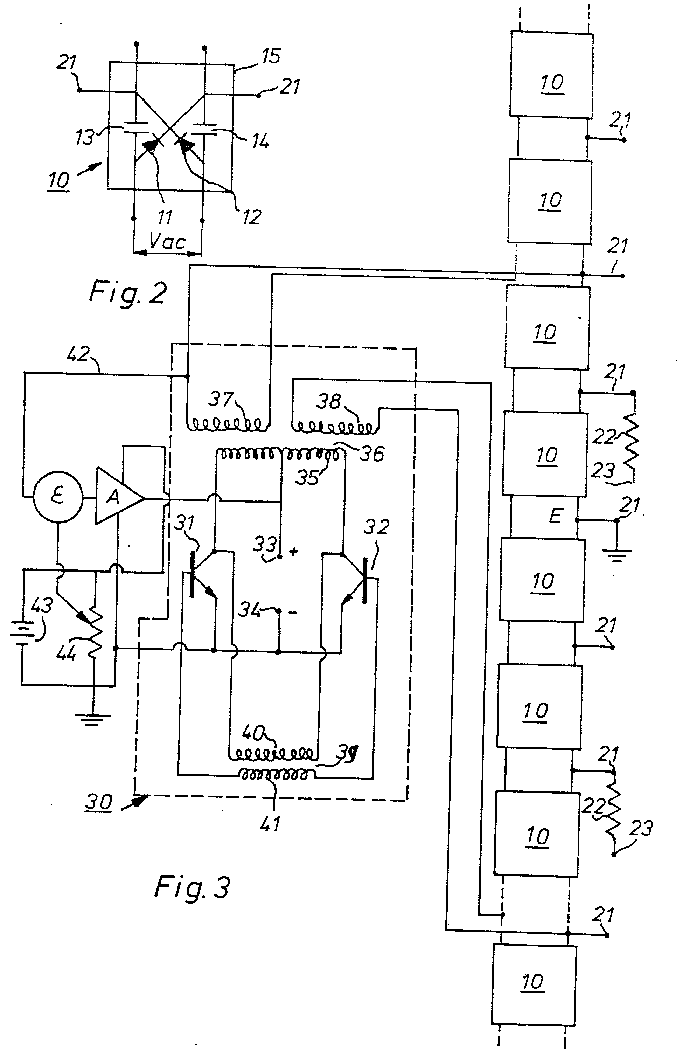

According to the illustration of Fig. 1, an ionography imaging chamber 5, represented in cross-sectional view, comprises electrodes 6 and 7 onto one of which a dielectric receptor 8 is provided. Within the space defined by electrodes 6 and 7 is provided a radiation responsive medium, preferably a high atomic number gas, which converts part of the incoming radiation (indicated in dotted lines) into a charge pattern formed by charge carriers of a given polarity. Under the influence of a suitable electric field, created by DC source $10_n$, formed by a plurality of rectifier units 10 according to the invention (see fig.2) the charge carriers migrate towards an electrode and are intercepted by the dielectric receptor 8 and may be rendered visible by known electrographic developing techniques after withdrawal of the dielectric receptor 8 from the imaging chamber 5. It will be clear to the skilled worker that, when only the field between the electrodes 6 and 7, created by the DC-source $10_n$, is present, problems related to image sharpness may arise. Indeed, due to the oblique incidence of the radiation and the perpendicular orientation of the field lines, the charges which are created according to an oblique line a will deposit on the dielectric receptor 8 according to line b, depending on the distance between the electrodes 6 and 7 at which they are formed.

As it has been observed that the unsharpness of the image obtained after processing may rise to a considerable degree, especially at the areas located in the vici-

GV.925

nity of the periphery of the dielectric carrier 8, field correcting expedients have to be provided. These field correcting expedients will provide for an alternative orientation of the electric field lines in the space defined by electrodes 6 and 7 in such a way that the lines are deviated from their parallel orientation and will point towards the source of radiation (not represented) so that they coincide with the orientation of the emitted radiation.

A convenient way to provide for the necessary field correction may be obtained by the addition of a supplementary electric field to the field existing between electrodes 6 and 7. The configuration of said field on each electrode must be such that it conforms to a spherical cap, the centre of the sphere being the source of radiation. The final field existing at the electrodes 6 and 7 of the ionography imaging chamber 5 will thus conform to concentric spherical caps whereby the difference between the fields between both electrodes will be equal to the initial field, generated by the DC-source 10.

It will be clear to those skilled in the art that geometrically correct spherical fields can only be built-up very difficultly and that for convenience sake recurrence will be made to approximations.

To this end, electrodes 6 and 7 are provided with a plurality of supplementary concentric ring electrodes 9, respectively 9', to which suitable electric DC potentials delivered by DC sources $10_a...10_c$ and $10'_a...10'_c$ are applied. Each of the DC sources $10_a...10_c$, $10'_a...10'_c$ will also be formed by a plurality of rectifier units 10 according to the invention (see fig. 2). The concentric ring electrodes 9 and 9' may be formed by selective etching techniques or may be even embedded in the electrodes 6 and 7 during the manufacture of the latter (as illustrated).

GV.925

- 8 -

The relation existing between the DC-potentials of the sources $10_a$-$10_c$, $10'_a$-$10'_c$ and $10_n$ may be expressed as follows :

$$E_{10_a} - E_{10_{a'}} = E_{10_n}$$
$$E_{10_b} - E_{10_{b'}} = E_{10_n}$$
$$E_{10_c} - E_{10_{c'}} = E_{10_n}$$
...

and $E_{10_c} > E_{10_b} > E_{10_a}$
$$E_{10_{c'}} > E_{10_{b'}} > E_{10_{a'}}$$

The relationship existing between $E_{10_a}$, $E_{10_b}$, $E_{10_c}$ ... and $E_{10_{a'}}$, $E_{10_{b'}}$, $E_{10_{c'}}$, .. is such that both systems conform to the equation of concentric circles and moreover to concentric spheres when the electrodes 9 have a circular shape (as assumed here).

The sources $10_a$.. $10_c$, $10_{a'}$.. $10_{c'}$ may be formed by various techniques. It will be clear that providing said sources in the form of material batteries is quite impractical, due to the very high voltages ($E_{10_n}$ in the order of 15 kVolts) which are involved.

Therefore, recurrence may be made to potentiometric techniques of conventional design but they are impractical too, as the potentiometer from which the voltages are derived would consume the major part of the energy, due to the relatively high specific resistance of the electrodes 6 and 7 themselves (from $10^8$ to $10^{11}$ Ohm cm).

According to the invention now, the DC-voltages represented by the source symbols $10_a$, $10_b$, $10_{c'}$ ..., $10_{a'}$, $10_{b'}$, $10_{c'}$, .. and $10_n$ may be obtained by means of a static potentiometer which is composed of a plurality of identical rectifying units 10, each unit generating a given, constant DC-voltage.

In order to create over the electrodes 6, 7 electric

GV.925

fields which conform to a spherical shape, the number of cells between two taps 21 will be chosen in such a way that the series of voltages which are each time formed, will behave as satisfying the equation of concentric circles.

The basic design of a rectifier unit 10 is illustrated in fig. 2. As may be seen, said rectifier unit comprises two rectifiers 11 and 12 and two capacitors 13 and 14. The capacitors 13 and 14 are loaded by the rectifiers 11 and 12 when the alternating voltage $V_{AC}$ appearing at the terminals acting as input terminals, makes the rectifiers conducting. So capacitor 13 is loaded by diode 12 during that part of the AC-cycle the anode of diode 12 has a positive polarity During the next part of the cycle, it is the capacitor 14 which is loaded by diode 11. After one complete cycle of the AC-voltage, both capacitors 13 and 14 are loaded to approximately the peak value of the AC-voltage. The loads (not shown) are connected between the output terminals 21 and the ground. In case a plurality of units 10 are connected in series the output terminals of the first one will act as input terminals for the second one, etc. The diodes 11 and 12 may be semiconductor devices as illustrated here, but it will be appreciated that every type of rectifier may be used conveniently, even rectifying elements provided with supplementary control electrodes such as thyristors, etc. The rectifier unit 10 may be mounted in a casing 15 for more convenience and safety, whereinafter the residual space may be filled with a highly insulating substance.

The AC-voltage, applied to the rectifier unit, may cover a rather broad frequency range, in the range of 50 c/s-75 kc/s for example, and preferably between 10 and 50 kc/s, so that a practically optimum charging of the capacitors 13 and 14 may be realized. It will be clear that for AC-voltages of relatively high frequency diodes 11 and

GV.925

12 must be of the rapid switching time type. A type that is used conveniently is the high voltage diode type BB10 of International Rectifier Cy. By series-coupling of a plurality of rectifier units 10, the voltage at consecutive capacitors are added to each other, so that very high DC-voltages are generated. In the mean time, the capacitors 13, 14 provide for a smoothening effect of the rectified DC-voltage.

Fig. 3 illustrates how a plurality of rectifier units 10 may be coupled in series in order to obtain a DC-voltage having a magnitude equal to the product of the basic DC-voltage of each unit and to the number of units 10. In case one desires to dispose of as well positive as negative DC-voltages, a point along the series, such as point E, may be chosen as the zero reference point.

It will be clear that when the diodes 11 and 12 in the rectifier units 10 are coupled as it is illustrated in the unit of fig. 2, the DC-voltage obtained at the outputs 21, lying above the reference point E will be positive, whereas the DC-voltage at the outputs 21 lying under the reference point will be negative. In case the diodes 11 and 12 are reversed, so that the direction of the durrent starts flowing in opposite direction, the reverse situation is obtained.

As also illustrated in fig.3 the AC-voltage to be converted is delivered by a high-frequency power oscillator 30 formed by transistors 31 and 32 which convert the DC-power applied to terminals 33 and 34 into a square-wave pattern which appears at the primary winding 35 of transformer 36. Via the secondary windings 37 and 38 of the transformer 36, the AC-voltages are applied to the series circuit of rectifier units 10. The output of the secondary windings 37 and 38 may be regulated in frequency as well as in magnitude. This is obtained by means of control circuits. One of said circuits which particularly

GV.925

provides the stabilization of the frequency is composed of an auxiliary transformer 39, which winding 40 is directly coupled with the primary winding 35 of transformer 36 and which secondary winding 41 is coupled with the base of power transistors 31 and 32.

Supplementary regulations and controls are carried out by means of a sensing circuit which comprises a controlled DC-power amplifier A, one input of which is connected to the output of a regulator ε sensing amplitude variations at an arbitrarily chosen point in the series of rectifier units 10 via the lead 42. The reference DC-signal is obtained by means of a potentiometer formed by DC-source 43 and variable resistor 44. The output of the regulator is applied at the input of DC-power amplifier A, so that the voltage between terminals 33, 34 is stabilized, and amplitude variations in the output of the oscillator 30 are excluded.

As may also be derived from fig. 3, the series of rectifier units 10 are connected at a given point with secondary winding 38 of transformer 36 which delivers the same AC-voltage as secondary winding 37. This is done in order to compensate for the unevitable voltage drop along the series of rectifier units 10 and which is due to the ohmic losses occurring along the line. These voltage drops may be compensated by means of a "refreshing" technique which consists in applying the same AC-signal at an arbitrarily chosen point where otherwise the DC-voltage would already have been decreased substantially. In case extremely long series of rectifier units 10 are realized, such refreshing technique may be applied as many times as necessary.

Finally, the graph in fig. 4 illustrates how the mechanism of the refreshing technique is working. In the graph, the abscissa denotes the number n of rectifying units 10 placed in series. On the ordinate, the magnitude

GV.925

of the DC-voltage is plotted out which each of them produces in function of the distance in relation to the point where the AC-voltage is applied. It will be clear that a constant value of such DC-voltage is desired, such as repr sented by the linear curve 50. In practice, however, this requirement is not fulfilled and the relationship which may be realized may be represented by the curve 51, so that after a given number of rectifier units a voltage drop amounting to $\Delta$ E occurs. In order to compensate for this inconvenience, a voltage varying according to the curve 52 will be built-up, so that the resultant voltage distribution may be represented by the curve 53. It may be derived that the relationship obtained after refreshing is not purely linear but the straight line approximation is realized in a sufficient way.

A preferred embodiment of the apparatus which has been successfully used for generating the required voltages in anionography imaging chamber as aforedescribed, showed the following characteristics :

- switching power transistors type 2N 5686 of MOTOROLA Cy
- operating frequency : between 10 and 50 kc/s
- DC-voltage produced by each rectifying cell : 465 Volts
- DC-power available : 40 to 50 Watts
- AC-power delivered by the oscillator : 100 Watts
- yield of the oscillator : 70%
- number of rectifier units : 96
- number of refreshing stages : 4 (evenly distributed along the line).

It will be clear that the high DC-voltage supply according to the invention may be provided with supplementary expedients in order to increase its ergonomic or safety characteristics. So may be provided resistors 22 (see fig. 3) - only a few of which being shown - in order to increase the internal resistance of the rectifying cells. In this way not only a substantial voltage drop at output

GV.925

terminals 23 may be realized when inadvertently touching the latter, but at the same time the rectifiers 11 and 12 (see fig. 2) may be adequately protected in the case an abnormal current for example in the case of short-circuiting between terminals 23 would occur. This would be the case when e.g. during the manufacturing stage of electrodes 6 or 7, the ring electrodes 9 embedded therein would be insufficiently insulated from each other so that a path of minor resistance is created, giving rise finally to a breakdown between such electrodes 9.

The DC-voltage rectifier/multiplier circuit according to the invention is compact and very reliable. Voltage stabilization is obtained by the refreshing technique. As a consequence of the complete absence of heat generation during operation, the whole circuit may be embedded in an epoxy-resin casing.

GV.925

- 1 -

WHAT WE CLAIM IS :

1. DC-voltage supply converting an AC-voltage delivered by an AC-source into a DC-voltage, comprising first and second rectifiers each having at least a cathode and an anode, and first and second capacitors each having first and second electrodes, said apparatus being characterized in that the cathode of said first rectifier is connected to the first electrode of said first capacitor and the anode of said first rectifier is connected to the second electrode of said second capacitor and, analogously, the cathode of said second rectifier is connected to the first electrode of said second capacitor and the anode of said second rectifier is connected to the second electrode of said first capacitor, and in that there is a pair of input terminals which are respectively connected to different corresponding electrodes of said first and second rectifiers, and a pair of output terminals which are respectively connected to one and the other of the other corresponding electrodes of such rectifiers.

2. DC-voltage supply according to claim 1, wherein said first and second rectifiers are solid state rectifiers.

3. DC-voltage supply according to claim 2, wherein said rectifiers have short switching times.

4. DC-voltage supply according to any of the preceding claims and in the form of a unitary component having facility for easy coupling in series with any number of other like

GV.925

components to form a voltage-multiplier rectifier and having terminals via which a DC-voltage can be tapped from such multiplier.

5. DC-voltage supply comprising a plurality of DC-voltage supplies according to any of the preceding claims, such supplies being connected together in series.

6. DC-voltage supply according to claim 5, connected to a source of alternating current with a frequency of 10 to 50 kc/s.

7. DC-voltage supply according to claim 5 or 6, wherein such rectifier is connected to an AC-source supplying current in square wave form.

8. DC-voltage supply according to any of claims 5 to 7, such rectifier being connected to an AC-source comprising a power oscillator and a power transformer.

9. DC-voltage supply according to claim 8, wherein said oscillator has means for controlling its output power and frequency.

10. DC-voltage supply according to any of claims 5 to 9 wherein the rectifier is coupled to an AC-source via a transformer having a secondary winding connected to the input terminals of the first rectifying apparatus in the series and at least one other secondary winding connected to the input terminals of another rectifying apparatus in such series for boosting the voltage at that point in the multiplier.

11. DC-voltage supply according to any of claims 5 to 10 and having a time constant such that a substantially continuous DC-voltage is obtained as output.

GV.925

Fig. 1

Fig. 4

Fig. 2

Fig. 3

| | European Patent Office | EUROPEAN SEARCH REPORT | Application number |
|---|---|---|---|
| | | | EP 78 20 0315 |

| DOCUMENTS CONSIDERED TO BE RELEVANT | | | CLASSIFICATION OF THE APPLICATION (Int. Cl.²) |
|---|---|---|---|
| Category | Citation of document with indication, where appropriate, of relevant passages | Relevant to claim | H 02 M 7/10<br>G 03 G 15/044 |
| | DE - B - 1 170 528 (SIEMENS SCHUCKERTWERKE AG)<br><br>* Figure 3 *<br><br>--- | 1,4,5 | |
| | GB - A - 1 090 995 (E.K. COLE LTD.)<br>* Page 1, lines 9-13; page 3, lines 73-106; page 4, lines 15-42; figures 13 and 14 *<br><br>--- | 1,4-6,<br>10,11 | |
| | FR - A - 2 177 477 (REDELEC S.A.R.L.)<br>* Page 6, lines 22-27; page 7, lines 20-24; figures *<br><br>--- | 2,6,8,<br>9 | **TECHNICAL FIELDS SEARCHED (Int.Cl.²)**<br><br>H 02 M 7/10<br>H 01 L 25/00 |
| | FR - A - 1 464 868 (CENTRE NATIONAL DE LA RECHERCHE SCIENTIFIQUE)<br>* Page 3, third paragraph; page 4, left-hand column; figures *<br><br>--- | 2,4,5,<br>7-9 | |
| | DE - A - 2 263 544 (VEB TRANSFOR-MATOREN- UND ROENTGENWERK HERMAN MATERN)<br>* Page 5, claim 1; figure *<br><br>--- | 1,10 | **CATEGORY OF CITED DOCUMENTS**<br><br>X: particularly relevant<br>A: technological background<br>O: non-written disclosure<br>P: intermediate document<br>T: theory or principle underlying the invention |
| | DE - B - 1 259 452 (SIEMENS AG)<br>* Figure *<br><br>----- | 1 | E: conflicting application<br>D: document cited in the application<br>L: citation for other reasons |
| The present search report has been drawn up for all claims | | | &: member of the same patent family, corresponding document |

| Place of search | Date of completion of the search | Examiner |
|---|---|---|
| The Hague | 27-02-1979 | EXELMANS |

EPO Form 1503.1 06.78